# EUROPEAN PATENT SPECIFICATION

(11) **EP 3 734 489 B1**
(45) Date of publication and mention of the grant of the patent: **19.10.2022**
(21) Application number: 19852993.5
(22) Date of filing: 25.06.2019
(51) Int. Cl.: H04L 9/40, G06F 21/64, G06Q 30/00, G06Q 50/26, G06V 40/16, G06Q 50/18

(54) **EVIDENCE COLLECTION METHOD AND SYSTEM BASED ON BLOCKCHAIN EVIDENCE STORAGE**
VERFAHREN UND SYSTEM ZUR SAMMLUNG VON BEWEISEN AUF DER BASIS EINES BLOCKCHAIN-EVIDENZSPEICHERS
PROCÉDÉ ET SYSTÈME DE COLLECTE DE PREUVES BASÉS SUR LE STOCKAGE DE PREUVES D'UNE CHAÎNE DE BLOCS

(30) Priority: 21.08.2018 CN 201810954378
(43) Date of publication of application: 04.11.2020
(73) Proprietor: Advanced New Technologies Co., Ltd., George Town, Grand Cayman KY1-9008 (KY)
(72) Inventor: YANG, Xinying, Hangzhou, Zhejiang 311121 (CN)
(74) Representative: Goddar, Heinz J.
(86) International application number: PCT/CN2019/092635
(87) International publication number: WO 2020/038095

(56) References cited:
- CN-A- 105 975 868
- CN-A- 107 392 813
- CN-A- 107 682 308
- CN-A- 107 682 308
- CN-A- 108 390 894
- CN-A- 109 376 552
- US-A1- 2017 249 482
- US-B1- 9 870 508
- US-B1- 9 953 231
- SILVIA BONOMI ET AL: "B-CoC: A Blockchain-based Chain of Custody for Evidences Management in Digital Forensics", ARXIV.ORG, CORNELL UNIVERSITY LIBRARY, 201 OLIN LIBRARY CORNELL UNIVERSITY ITHACA, NY 14853, 26 July 2018 (2018-07-26), XP081662341, DOI: 10.4230/OASICS.TOKENOMICS.2019.12
- Anonymous: "Authenticity Verification of User Generated Video Files", , 13 July 2018 (2018-07-13), XP055727072, Retrieved from the Internet: URL:https://prover.io/assets/White_Paper_e n.pdf [retrieved on 2020-09-02]

## Description

### TECHNICAL FIELD

Implementations of the present specification relate to the field of information technology, and particularly, to a blockchain ledger-based evidence acquisition method and system.

### BACKGROUND

In judicial practice, for some evidence (such as a witness testimony and a testament) that represents, as an essential element, the true intentions of the parties to a lawsuit, the evidence is sometimes collected on-site by an authority (such as a court or a notary office) in order to obtain decided legal validity for the evidence.

For example, for the witness testimony, in order to prevent the obtained testimony from being tampered with prior to submission to the court, the witness is usually required to give the testimony in person in the court.

For another example, in order to prevent the testament made by a testator from being tampered with prior to submission to the court, which cannot reflect the true intention of the testator, the testament made by the testator can be notarized by a notary on site.

Therefore, there is a need for an evidence acquisition method that is more convenient for the parties.

SILVIA BONOMI ET AL, "B-CoC: A Blockchain-based Chain of Custody for Evidences Management in Digital Forensics" (ARXIV.ORG, CORNELL UNIVERSITY LIB, 2018-07-26) discloses a Blockchain-based Chain of Custody (CoC) for evidences management in digital forensics. For instance, a digital evidence "d_ev" is collected by an authorized entity such as a police office, a lawyer, a judge or a magistrates and submitted to a frontend interface. The frontend interface generates an ID for digital evidence d_ev using a nonce n, stores (ID, n, d_ev) in an Evidence database (external to the blockchain) and issues a CreateEvidence() transaction in an Evidence Log of a blockchain.

CN 107682308 A discloses an electronic evidence preservation system based on a block chain subliminal channel technology, which comprises a client, a server, an auditing terminal and a network terminal. It is characterized in that the client is used for performing off-line acquisition and processing, online management and evidence collection on a user electronic evidence; the server generates an existence proof for the evidence and performs hosting and recovery on the chain evidence according to a user address; the auditing terminal is used for auditing the chain evidence, generating a corresponding transaction on a block chain and constructing an auditing proof so as to main the integrity, the timeliness and the non-repudiation of an auditing result.

Anonymous, "Authenticity Verification of User Generated Video Files", (URL: https://prover.io/assetsAVhite_Paper_en.pdf, 2018-07-13) presents "PROVER", an open source decentralized Blockchain platform for verification of authenticity of user generated video files. The purpose of PROVER is to eliminate forgery of video materials and confirm their authenticity using video algorithms and Blockchain. Section 6.2 recites the case of recording a video for an auto-insurance.

US 9,870,508 B1 discloses a technology that facilitates identification of segments of an originally captured stream that find their way into a finally edited stream and identification of changed segments in the finally edited stream. It involves a summary analysis on self-aligned meta-blocks of stream data, pushing operation of at least some self-aligned meta-hashes into a blockchain network, and application of an alignment and hashing procedure described in a smart contract.

US 9,953,231 B1 discloses techniques for authentication based on heartbeat detection and facial recognition in video data to provide different access privileges to services of a banking application.

### SUMMARY

The invention is defined by the independent claims. Preferred embodiments are recited in the dependent claims. Below, in order to solve the problem that an existing evidence acquisition method is not convenient for a party, implementations of the present specification provide a blockchain ledger-based evidence acquisition method and system. The technical solutions are as follows.

According to the technical solutions provided in the implementations of the present specification, a user (party to a lawsuit) can operate user equipment to record one or more of the user's behavior and voice into a multimedia file and then send the multimedia file to a service device, so the service device constructs a target transaction based on the multimedia file and broadcasts the target transaction to a blockchain network for each node in the blockchain network to add the target transaction to the blockchain based on a consensus mechanism. As such, multi-party storage of the multimedia file is realized. In the implementations of the present specification, a party can collect evidence *(i.e.,* a multimedia file) by recording one or more of the user's behavior and voice anytime anywhere without relying on an authority (*e.g*., a court or a notary office), and the collected evidence can be stored on the blockchain network, so the collected evidence is difficult to tamper with, and can be recognized by the authority and has legal validity.

It should be understood that the general descriptions above and the detailed descriptions below are merely examples and illustrative, and cannot limit the implementations of the present specification.

In addition, any one of the implementations of the present specification does not need to achieve all the effects above.

### BRIEF DESCRIPTION OF DRAWINGS

To describe the technical solutions in the implementations of the present specification or in the existing technologies more clearly, the following briefly describes the accompanying drawings needed for describing the implementations or the existing technologies. Clearly, the accompanying drawings in the following descriptions merely show some implementations of the present specification, and a person of ordinary skill in the art can still derive other drawings from these accompanying drawings.
FIG. 1 is a schematic flowchart illustrating a blockchain ledger-based evidence acquisition method according to an implementation of the present specification;
FIG. 2 is a schematic structural diagram illustrating a blockchain ledger-based evidence acquisition system according to an implementation of the present specification;
FIG. 3 is a schematic structural diagram illustrating a blockchain ledger-based evidence acquisition apparatus according to an implementation of the present specification;
FIG. 4 is a schematic structural diagram illustrating another blockchain ledger-based evidence acquisition apparatus according to an implementation of the present specification; and
FIG. 5 is a schematic structural diagram illustrating a computer device used to configure a method in an implementation of the present specification.

### DESCRIPTION OF IMPLEMENTATIONS

To make a person skilled in the art better understand the technical solutions in the implementations of the present specification, the following describes in detail the technical solutions in the implementations of the present specification with reference to the accompanying drawings in the implementations of the present specification. Clearly, the described implementations are merely some but not all of the implementations of the present specification. All other implementations obtained by a person of ordinary skill in the art based on the implementations of the present specification shall fall within the protection scope of the present specification.

The following describes in detail the implementations of the present specification.

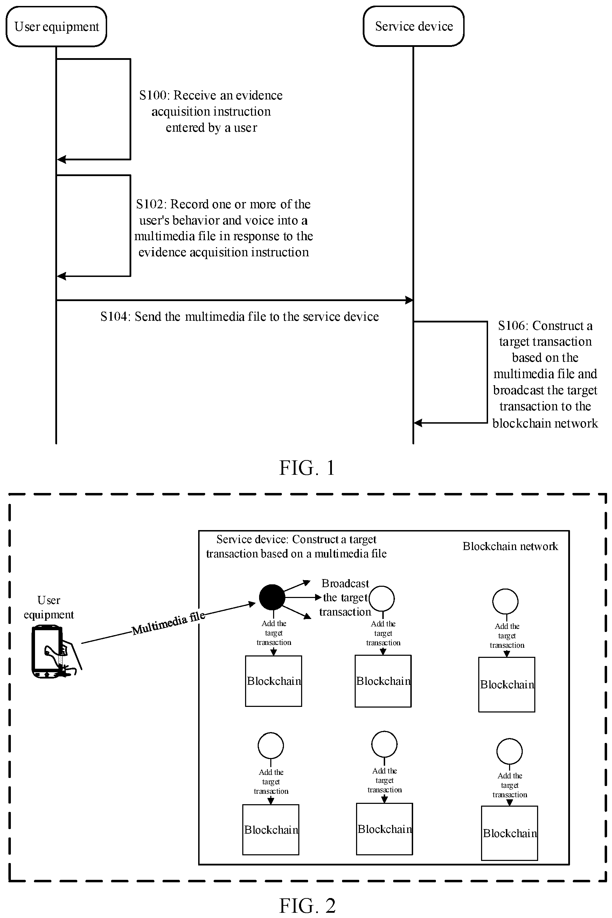

FIG. 1 is a schematic flowchart illustrating a blockchain ledger-based evidence acquisition method according to an implementation of the present specification, and the method includes the following steps:
S100: User equipment receives an evidence acquisition instruction entered by a user.
S102: The user equipment records one or more of the user's behavior and voice into a multimedia file in response to the evidence acquisition instruction.

As described in the background, in judicial practice, for some evidence (such as a witness testimony and a testament) that represents, as an essential element, the true intentions of the parties to a lawsuit, the evidence is sometimes collected on-site by an authority (such as a court or a notary office) in order to obtain decided legal validity for the evidence.

In the implementations of the present specification, the user(s) refers to the above party (parties). The user can make a true-intention representation by using the method provided in the implementations of the present specification, to form evidence *(i.e.,* the multimedia file), and the formed evidence can be stored on a blockchain and cannot be tampered with.

The user equipment is the user's device, and can be specifically a mobile phone, a computer, or another device. It should be noted that the user equipment generally is a device having a data processing function, a communications function, and a multimedia information acquisition function. The multimedia information acquisition function of the user equipment is embodied in that the user equipment has elements such as a camera and a recorder.

In the implementations of the present specification, when needing to make a true-intention representation, the user can enter an evidence acquisition instruction to the user equipment to trigger the user equipment to perform evidence acquisition.

Further, the user equipment can receive the evidence acquisition instruction entered by the user through a target account. The target account is registered on a service device prior to the receiving.

It should be noted here that the target account does not necessarily have to be previously registered with the service device by the user, that is, the user does not necessarily have to be the owner of the target account. To that extent, in step S102, after successfully authenticating an identity of the user based on identity authentication information corresponding to the target account, the user equipment records the one or more of the user's behavior and voice into the multimedia file.

The identity authentication information can be a password preset by the owner of the target account, a facial feature or a voiceprint provided in advance, etc.

In the implementations of the present specification, the multimedia file can be specifically any one of an audio file, a video file, a text file, an image file (such as a picture or a graphic interchange format (GIF) picture).

For example, the user equipment can directly record voice information of the user into an audio file. For another example, the user equipment can first collect voice information of the user, and then convert the voice information into a text file.

In addition, in step S102, before performing recording, the user equipment can detect a recording scene to obtain a recording scene parameter. The recording scene parameter includes at least one of scene location information, scene environment information, a voice feature of the user, and an expression feature of the user.

It should be noted that the scene location information can be location coordinates of the scene that the user makes an intention representation. The scene environment information can be information such as the brightness of the scene and the space size of the scene. The voice feature of the user can be features such as the tone, the voice speed, and the voice decibel of the user. The expression feature of the user can be an image obtained by taking a still or motion picture of the expression of the user.

Then, the user equipment can send the recording scene parameter(s) to the service device, and the service device analyzes the recording scene parameter and obtains, based on the analysis result, a coercion representation value used to represent a probability that the user is in a coerced state. The coercion representation value is positively related to the probability that the user is in the coerced state.

For a person skilled in the art, it is easy to think of various ways to analyze, based on the recording scene parameter, the probability that the user is coerced. A few examples are given below.

For example, the service device can compare the location information of a device, through which the target account is usually logged into, with the location information of the recording scene. If the two pieces of location information are inconsistent, it indicates that the location, from which the target account is currently logged into, is abnormal, and the user may be coerced to a strange location, or the target account is not logged into by the owner personally.

For example, the service device can determine through analysis that the recording scene is a living room, a basement, or a warehouse based on the brightness and the space size of the recording scene, and if the recording scene is not a living room, it indicates that the user may be coerced.

For example, the service device can determine through analysis whether the voice of the user is stable based on features such as the tone, voice speed, and voice decibel of the user. If the user is coerced, the voice is usually unstable.

For example, the service device can analyze the expression of the user based on the image of the user, and determine whether the user is nervous. If the user is emotionally stressed, the user may be coerced and cannot make a true-intention representation.

In summary, after obtaining the coercion representation value, the service device can determine whether the coercion representation value is less than a specified threshold *(i.e.,* to determine whether the coercion representation value is lower), and if so, it indicates that the user is not likely to be coerced, and can make a true-intention representation in this case. Therefore, the service device notifies the user equipment to record the one or more of the user's behavior and voice into the multimedia file.

S104: The user equipment sends the multimedia file to the service device.

S106: The service device constructs a target transaction based on the multimedia file and broadcasts the target transaction to the blockchain network.

After obtaining the multimedia file, the user equipment collects evidence that represents, as an essential element, the true intention of the user, and can send the multimedia file to the service device.

Because the service device is also a node in the blockchain network, the service device can construct the target transaction based on the multimedia file and broadcasts a block containing the target transaction to the blockchain network, so each node in the blockchain network adds the block containing the target transaction to the respective copy of the blockchain based on a consensus mechanism. Thus, the multimedia file is stored in the blockchain, and is difficult to be tampered with.

It should be noted that the transaction (transfer) described in the present specification refers to a piece of data that is created by a user by using a blockchain client and that needs to be finally added to a distributed database of the blockchain.

Transactions in the blockchain include transactions in a narrow sense and transactions in a broad sense. A transaction in a narrow sense refers to a value transfer added by a user to the blockchain. For example, in a conventional Bitcoin blockchain network, a transaction can be a transfer initiated by a user in the blockchain. A transaction in a broad sense refers to service data that is proposed by a user to the blockchain and that has a service or business intention. For example, an operator can establish a consortium blockchain based on actual service or business needs, and deploy some other types of online services (for example, a rental service, a vehicle scheduling service, an insurance claim service, a credit service, and a medical service) that are not related to value transfer in the consortium blockchain. In such consortium blockchain, a transaction can be a service message or a service request that is provided by a user to the consortium blockchain and that has a service or business intention.

In the implementations of the present specification, the service device can construct the target transaction based on the multimedia file by constructing the target transaction containing the multimedia file. In this case, the multimedia file itself is stored in the blockchain, which requires a high storage capacity of the nodes in the blockchain network.

In addition, the service device can construct the target transaction based on the multimedia file in the following way: on the one hand, the service device stores the multimedia file, and can specifically store the multimedia file locally or in the cloud; on the other hand, the service device can determine a target hash corresponding to the multimedia file based on the multimedia file by using a hash algorithm, and then construct a target transaction including the target hash. The target hash is actually a segment of character string, and the storage space occupied is very small, which does not require a high storage capacity of the nodes in the blockchain network. Moreover, because whether the multimedia file is modified can be detected by using the target hash, storing the target hash into the blockchain is equivalent to realizing multi-party storage of the multimedia file.

Further, the service device can directly use a hash algorithm to calculate a hash value of the multimedia file as the target hash. The service device can also calculate the target hash corresponding to the multimedia file by using the hash algorithm and using the multimedia file and storage location information thereof as input of the hash algorithm.

According to the method in FIG. 1, a user (party to a lawsuit) can operate user equipment to record one or more of the user's behavior and voice into a multimedia file and then send the multimedia file to a service device, so the service device constructs a target transaction based on the multimedia file and broadcasts the target transaction to a blockchain network, and further each node in the blockchain network adds the target transaction to the blockchain based on a consensus mechanism. As such, multi-party storage of the multimedia file is realized. In the implementations of the present specification, a party can collect evidence *(i.e.,* a multimedia file) by recording one or more of the user's behavior and voice anytime anywhere without relying on an authority (*e.g*., a court or a notary office), and the collected evidence can be stored on the blockchain network, so the collected evidence is difficult to tamper with, and can be recognized by the authority and has legal validity.

Further, in practice, the user may not be the owner of the target account, and therefore, an intention representation made by the user through the target account may not represent the will of the owner of the target account.

Therefore, in the implementations of the present specification, the producer of one or more of the behavior and the voice recorded in the multimedia file can be identified to determine whether the person is the owner of the target account.

Specifically, the service device can pre-obtain a facial feature (such as the face feature or the iris feature) and a voiceprint feature of the owner of the target account as a trusted facial feature and a trusted voiceprint feature corresponding to the target account. Before the service device broadcasts the target transaction to the blockchain network, in response to that the multimedia file is an audio file, the service device extracts a voiceprint feature of the user from the multimedia file; compares the extracted voiceprint feature with the trusted voiceprint feature; adds a consistency result into the target transaction in response to that the extracted voiceprint feature and the trusted voiceprint feature are consistent with one another; and adds an inconsistency result into the target transaction in response to that the extracted voiceprint feature and the trusted voiceprint feature are inconsistent with one another; in response to that the multimedia file is a video file or an image file, the service device extracts a facial feature of the user from the multimedia file; compares the extracted facial feature with the trusted facial feature; adds a consistency result into the target transaction in response to that the extracted facial feature and the trusted facial feature are consistent with one another; and adds an inconsistency result into the target transaction in response to that the extracted facial feature and the trusted facial feature are inconsistent with one another; or in response to that the multimedia file is an audio and video file, the service device extracts a voiceprint feature and a facial feature of the user from the multimedia file; compares the extracted voiceprint feature with the trusted voiceprint feature; compares the extracted facial feature with the trusted facial feature; adds a consistency result into the target transaction in response to that the extracted voiceprint feature and the trusted voiceprint feature are consistent with one another and the extracted facial feature and the trusted facial feature are consistent with one another; and adds an inconsistency result into the target transaction in response to that the extracted voiceprint feature and the trusted voiceprint feature are inconsistent with one another or the extracted facial feature and the trusted facial feature are inconsistent with one another.

That is, if one or more of the facial feature and the voiceprint feature extracted from the multimedia file are inconsistent with one or more of the facial feature and the voiceprint feature of the owner of the target account, it indicates that the multimedia file does not represent the will of the owner of the target account. Even if the multimedia file is stored in the blockchain, it does not indicate that the multimedia file is a piece of evidence that represents, as an essential element, the intention of the owner of the target account. Therefore, information indicating whether the multimedia file represents the will of the owner of the target account (a consistency result or an inconsistency result) is also included in the target transaction, and then stored in the blockchain for publicity.

Further, if the service device includes an inconsistency result into the target transaction, identity information of the user can be queried based on one or more of the extracted voiceprint feature and the extracted facial feature of the user, and then the identity information of the user is included into the target transaction. This means that if the multimedia file is not produced by the owner of the target account, it indicates that the evidence, *i.e.,* the multimedia file, is forged and the identity information of the user who has forged the evidence is also stored in the blockchain for publicity.

Still further, the credit rating of the user who has forged the evidence can also be adversely affected. For example, assume that there is a system for performing credit rating on each user based on the blockchain technique, and the credit score corresponding to each user is disclosed in the blockchain. Then, the credit score of the user who has forged the evidence can be deducted, and the deduction record can be stored in the blockchain for publicity.

In addition, in the implementations of the present specification, the service device can add a time stamp of a current time to the target transaction before the service device broadcasts the target transaction to the blockchain network. As such, it is also difficult to tamper with the time at which the multimedia file is stored on the blockchain. In some scenarios, such as a testament scenario, the testator can have made a plurality of testaments before death. Accordingly, a plurality of multimedia files are generated, and are stored on the blockchain by using the method shown in FIG. 1. Then, because the last testament made by the testator is valid according to the inheritance law, the blockchain can be queried to determine the time stamp corresponding to each multimedia file generated by the testator, and determine the multimedia file with the latest time as the latest testament made by the testator, that is, the valid testament.

FIG. 2 shows a blockchain ledger-based evidence acquisition system according to an implementation of the present specification. The system includes a blockchain network and user equipment, and any node in the blockchain network is a service device.

The user equipment receives an evidence acquisition instruction entered by a user; records one or more of the user's behavior and voice into a multimedia file in response to the evidence acquisition instruction; and sends the multimedia file to the service device; the service device constructs a target transaction based on the multimedia file and broadcasts a block containing the target transaction to the blockchain network; and each node in the blockchain network adds the block containing the target transaction to the respective copy of the blockchain based on a consensus mechanism.

As shown in FIG. 2, the solid point is the service device, which is a node in the blockchain network. The hollow point is a node in the blockchain network other than the service device.

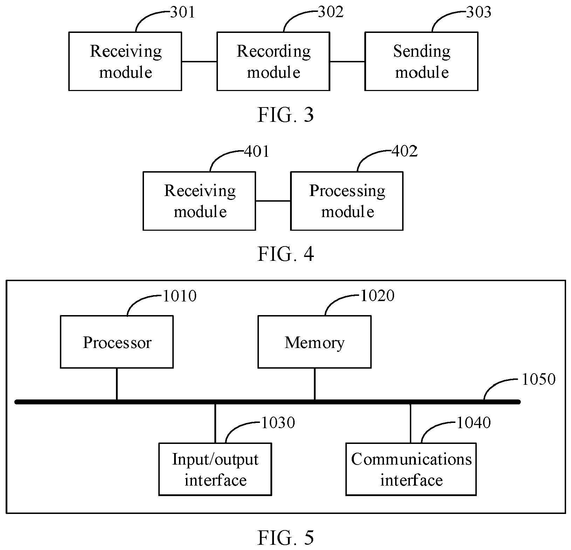

Besides the blockchain ledger-based evidence acquisition method shown in FIG. 1, implementations of the present specification further correspondingly provide a blockchain ledger-based evidence acquisition apparatus. As shown in FIG. 3, a service device is a node in a blockchain network, and the apparatus includes: a receiving module 301, configured to receive an evidence acquisition instruction entered by a user; a recording module 302, configured to record one or more of the user's behavior and voice into a multimedia file in response to the evidence acquisition instruction; and a sending module 303, configured to send the multimedia file to the service device, so the service device constructs a target transaction based on the multimedia file and broadcasts a block containing the target transaction to the blockchain network, and further each node in the blockchain network adds the block containing the target transaction to the respective copy of the blockchain based on a consensus mechanism.

Based on the blockchain ledger-based evidence acquisition method shown in FIG. 1, an implementation of the present specification further correspondingly provides a blockchain ledger-based evidence acquisition apparatus. As shown in FIG. 4, the apparatus is a node in a blockchain network, and the apparatus includes: a receiving module 401, configured to receive a multimedia file sent by user equipment, the multimedia file being obtained by recording one or more of a user's behavior and voice by the user equipment in response to an evidence acquisition instruction after receiving the evidence acquisition instruction entered by the user; and a processing module 402, configured to construct a target transaction based on the multimedia file and broadcast a block containing the target transaction to the blockchain network, so each node in the blockchain network adds the block containing the target transaction to the respective copy of the blockchain based on a consensus mechanism.

An implementation of the present specification further provides a computer device. The computer device includes at least a memory, a processor, and a computer program that is stored in the memory and that can run on the processor. When executing the program, the processor implements the functions of the above user equipment or service device.

FIG. 5 is a more detailed schematic diagram illustrating a hardware structure of a computing device according to an implementation of the present specification. The device can include a processor 1010, a memory 1020, an input/output interface 1030, a communications interface 1040, and a bus 1050. The processor 1010, the memory 1020, the input/output interface 1030, and the communications interface 1040 are communicatively connected to each other inside the device by using the bus 1050.

The processor 1010 can be implemented by using a general central processing unit (CPU), a microprocessor, an application-specific integrated circuit (ASIC), one or more integrated circuits, etc., and is configured to execute a related program, to implement the technical solutions provided in the implementations of the present specification.

The memory 1020 can be implemented by using a read-only memory (ROM), a random access memory (RAM), a static storage device, a dynamic storage device, etc. The memory 1020 can store an operating system and another application program. When the technical solutions provided in the implementations of the present specification are implemented by using software or firmware, related program code is stored in the memory 1020, and is invoked and executed by the processor 1010.

The input/output interface 1030 is configured to be connected to an input/output module, to input or output information. The input/output module (not shown in the figure) can be used as a component and configured in the device, or can be externally connected to the device to provide a corresponding function. The input device can include a keyboard, a mouse, a touchscreen, a microphone, various sensors, etc. The output device can include a monitor, a speaker, a vibrator, an indicator, etc.

The communications interface 1040 is configured to be connected to a communications module (not shown in the figure), to implement a communication interaction between the device and another device. The communications module can perform communication in a wired method (for example, USB or a network cable), or can perform communication in a wireless method (for example, a mobile network, Wi-Fi, or Bluetooth).

The bus 1050 includes one channel, used to transmit information between components (for example, the processor 1010, the memory 1020, the input/output interface 1030, and the communications interface 1040) of the device.

It should be noted that although only the processor 1010, the memory 1020, the input/output interface 1030, the communications interface 1040, and the bus 1050 of the device are shown, during specific implementation, the device can further include other components needed for implementing normal running. In addition, a person skilled in the art can understand that the device can include only components necessary for implementing the solutions in the implementations of the present specification, but does not necessarily include all components shown in the figure.

An implementation of the present specification further provides a computer readable storage medium. The computer readable storage medium stores a computer program. When executing the program, a processor implements the functions of the above user equipment or service device.

The computer readable medium includes persistent, non-persistent, movable, and unmovable media that can store information by using any method or technology. The information can be a computer readable instruction, a data structure, a program module, or other data. Examples of the computer storage medium include but are not limited to a phase change random access memory (PRAM), a static random access memory (SRAM), a dynamic random access memory (DRAM), another type of RAM, a ROM, an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage, another magnetic storage device, or any other non-transmission medium. The computer storage medium can be used to store information accessible by a computing device. Based on the definition in the present specification, the computer readable medium does not include transitory media such as a modulated data signal and carrier.

It can be understood from the descriptions of the implementations that, a person skilled in the art can clearly understand that the implementations of the present specification can be implemented by using software and a necessary general hardware platform. Based on such an understanding, the technical solutions in the implementations of the present specification essentially, or the part contributing to the existing technology, can be implemented in a form of a software product. The computer software product can be stored in a storage medium, such as a ROM/RAM, a magnetic disk, or an optical disc, and includes several instructions for instructing a computer device (which can be a personal computer, a server, a network device, etc.) to execute the method described in the implementations of the present specification or in some parts of the implementations of the present specification.

The system, method, module, or unit illustrated in the previous implementations can be implemented by using a computer chip or an entity, or can be implemented by using a product having a certain function. A typical implementation device is a computer in the form of a personal computer, a laptop computer, a cellular phone, a camera phone, a smart phone, a personal digital assistant, a media player, a navigation device, an e-mail transceiver, a game console, a tablet computer, a wearable device, or any combination of at least two of these devices.

The implementations of the present specification are described in a progressive method. For same or similar parts of the implementations, references can be made to the implementations. Each implementation focuses on a difference from other implementations. Particularly, the apparatus and device implementations are similar to the method implementation, and therefore are described briefly. For related parts, references can be made to the descriptions in the method implementation. The method implementation described above is merely an example. The modules described as separate parts can or cannot be physically separate. During implementation of the solutions in the implementations of the present application, functions of the modules can be implemented in one or more pieces of software and hardware. Some or all of the modules can be selected based on an actual need to implement the solutions in the implementations. A person of ordinary skill in the art can understand and implement the implementations of the present application without creative efforts.

The previous descriptions are merely specific implementations of the implementations of the present application. It should be noted that a person of ordinary skill in the art can further make several improvements or polishing without departing from the principles of the implementations of the present specification, and the improvements or polishing shall fall within the protection scope of the implementations of the present specification.

## Claims

1. A blockchain ledger-based evidence acquisition method, comprising:
receiving (S100), by user equipment, an evidence acquisition instruction entered by a user through a target account, the target account being registered on a service device prior to the receiving;
recording (S102), by the user equipment, one or more of a behavior and a voice of the user into a multimedia file in response to the evidence acquisition instruction;
sending (S104), by the user equipment, the multimedia file to the service device, the service device being a node in a blockchain network; and
constructing (S106), by the service device, a target transaction based on the multimedia file and broadcasting the target transaction to the blockchain network for each node in the blockchain network to add the target transaction to a blockchain based on a consensus mechanism;
wherein the method further comprises:
pre-obtaining, by the service device, a facial feature and a voiceprint feature of an owner of the target account as a trusted facial feature and a trusted voiceprint feature corresponding to the target account; and,
before the broadcasting, by the service device, the target transaction to the blockchain network, any of the following operations:
in response to that the multimedia file is an audio file, extracting, by the service device, a voiceprint feature of the user from the multimedia file; comparing the extracted voiceprint feature with the trusted voiceprint feature; adding a consistency result into the target transaction in response to that the extracted voiceprint feature and the trusted voiceprint feature are consistent with one another; and adding an inconsistency result into the target transaction in response to that the extracted voiceprint feature and the trusted voiceprint feature are inconsistent with one another;
in response to that the multimedia file is a video file or an image file, extracting, by the service device, a facial feature of the user from the multimedia file; comparing the extracted facial feature with the trusted facial feature; adding a consistency result into the target transaction in response to that the extracted facial feature and the trusted facial feature are consistent with one another; and adding an inconsistency result into the target transaction in response to that the extracted facial feature and the trusted facial feature are inconsistent with one another; or
in response to that the multimedia file is an audio and video file, extracting, by the service device, a voiceprint feature and a facial feature of the user from the multimedia file; comparing the extracted voiceprint feature with the trusted voiceprint feature; comparing the extracted facial feature with the trusted facial feature; adding a consistency result into the target transaction in response to that the extracted voiceprint feature and the trusted voiceprint feature are consistent with one another and the extracted facial feature and the trusted facial feature are consistent with one another; and adding an inconsistency result into the target transaction in response to that the extracted voiceprint feature and the trusted voiceprint feature are inconsistent with one another or the extracted facial feature and the trusted facial feature are inconsistent with one another.

2. The method according to claim 1, wherein the multimedia file specifically includes:
any one of an audio file, a video file, a text file, and an image file.

3. The method according to claim 1,
wherein the recording, by the user equipment, the one or more of the behavior and the voice of the user into the multimedia file specifically includes:
after successfully authenticating an identity of the user based on identity authentication information corresponding to the target account, recording, by the user equipment, the one or more of the behavior and the voice of the user into the multimedia file.

4. The method according to claim 1, wherein the recording, by the user equipment, the one or more of the behavior and the voice of the user into the multimedia file specifically includes:
detecting, by the user equipment, a recording scene to obtain a recording scene parameter;
sending, by the user equipment, the recording scene parameter to the service device;
determining, by the service device, a coercion representation value based on the recording scene parameter, the coercion representation value being used to represent a probability that the user is in a coerced state, and the coercion representation value being positively related to the probability that the user is in the coerced state;
determining, by the service device, whether the coercion representation value is less than a specified threshold; and
in response to that the coercion representation value is less than the specified threshold, notifying, by the service device, the user equipment to record the one or more of the behavior and the voice of the user into the multimedia file.

5. The method according to claim 4, wherein the recording scene parameter includes at least one of scene location information, scene environment information, a voice feature of the user, and an expression feature of the user.

6. The method according to claim 1, wherein the constructing, by the service device, the target transaction based on the multimedia file specifically includes:
constructing, by the service device, the target transaction containing the multimedia file.

7. The method according to claim 1, wherein the constructing, by the service device, the target transaction based on the multimedia file specifically includes:
storing, by the service device, the multimedia file, and determining a target hash corresponding to the multimedia file by using a hash algorithm based on the multimedia file; and
constructing, by the service device, the target transaction containing the target hash.

8. The method according to claim 7, wherein the determining, by the service device, the target hash corresponding to the multimedia file by using the hash algorithm based on the multimedia file specifically includes:
calculating, by the service device, the target hash corresponding to the multimedia file by using the hash algorithm and using the multimedia file and storage location information thereof as input of the hash algorithm.

9. The method according to claim 1, further comprising, before the broadcasting, by the service device, the target transaction to the blockchain network:
in response to that the service device adds an inconsistency result into the target transaction, querying and obtaining identity information of the user based on one or more of the extracted voiceprint feature and the extracted facial feature of the user; and
adding, by the service device, the identity information of the user into the target transaction.

10. The method according to claim 1, further comprising, before the broadcasting, by the service device, the target transaction to the blockchain network:
adding, by the service device, a time stamp of a current time into the target transaction.

11. One or more computer-readable storage media storing instructions thereon which, when executed by a service device being a node in a blockchain network, cause the service device to carry out a blockchain ledger-based evidence acquisition method comprising:
receiving, by the service device, a multimedia file sent by user equipment, the multimedia file being obtained by recording one or more of a user's behavior and voice by the user equipment in response to an evidence acquisition instruction received by the user equipment and entered by the user through a target account registered on the service device; and
constructing (S106) a target transaction based on the multimedia file and broadcasting the target transaction to the blockchain network for each node in the blockchain network to add the target transaction to a blockchain based on a consensus mechanism;
wherein the method further comprises:
pre-obtaining, by the service device, a facial feature and a voiceprint feature of an owner of the target account as a trusted facial feature and a trusted voiceprint feature corresponding to the target account; and,
before the broadcasting the target transaction to the blockchain network, any of the following operations:
in response to that the multimedia file is an audio file, extracting a voiceprint feature of the user from the multimedia file; comparing the extracted voiceprint feature with the trusted voiceprint feature; adding a consistency result into the target transaction in response to that the extracted voiceprint feature and the trusted voiceprint feature are consistent with one another; and adding an inconsistency result into the target transaction in response to that the extracted voiceprint feature and the trusted voiceprint feature are inconsistent with one another;
in response to that the multimedia file is a video file or an image file, extracting a facial feature of the user from the multimedia file; comparing the extracted facial feature with the trusted facial feature; adding a consistency result into the target transaction in response to that the extracted facial feature and the trusted facial feature are consistent with one another; and adding an inconsistency result into the target transaction in response to that the extracted facial feature and the trusted facial feature are inconsistent with one another; or
in response to that the multimedia file is an audio and video file, extracting a voiceprint feature and a facial feature of the user from the multimedia file; comparing the extracted voiceprint feature with the trusted voiceprint feature; comparing the extracted facial feature with the trusted facial feature; adding a consistency result into the target transaction in response to that the extracted voiceprint feature and the trusted voiceprint feature are consistent with one another and the extracted facial feature and the trusted facial feature are consistent with one another; and adding an inconsistency result into the target transaction in response to that the extracted voiceprint feature and the trusted voiceprint feature are inconsistent with one another or the extracted facial feature and the trusted facial feature are inconsistent with one another.

12. A blockchain ledger-based evidence acquisition system comprising a blockchain network, user equipment, and any node in the blockchain network being a service device, wherein the system is configured to carry out the method of any of claims 1 to 10.

## Patentansprüche

1. Beweiserfassungsverfahren auf Blockchain-Ledger-Basis, umfassend:
Empfangen (S100) einer durch einen Benutzer mittels eines Zielkontos eingegebenen Beweiserfassungsanweisung durch das Benutzergerät, wobei das Zielkonto auf einer Dienstvorrichtung vor dem Empfangen registriert ist;
Aufzeichnen (S102) eines Verhaltens und/oder einer Stimme des Benutzers in einer Multimediadatei durch das Benutzergerät als Reaktion auf die Beweiserfassungsanweisung;
Senden (S104) der Multimediadatei zu der Dienstvorrichtung durch das Benutzergerät, wobei die Dienstvorrichtung ein Knoten in einem Blockchain-Netzwerk ist; und
Konstruieren (S106) einer Zieltransaktion durch die Dienstvorrichtung auf der Basis der Multimediadatei und Rundsenden der Zieltransaktion zu dem Blockchain-Netzwerk, damit jeder Knoten in dem Blockchain-Netzwerk die Zieltransaktion zu einer Blockchain hinzufügt, auf der Basis eines Konsensmechanismus;
wobei das Verfahren ferner Folgendes umfasst:
Erhalten eines Gesichtsmerkmals und eines Stimmabdruckmerkmals eines Eigentümers des Zielkontos im Voraus als vertrauenswürdiges Gesichtsmerkmal und vertrauenswürdiges Stimmabdruckmerkmal, das dem Zielkonto entspricht; und
beliebige der folgenden Operationen vor dem Rundsenden der Zieltransaktion zu dem Blockchain-Netzwerk durch die Dienstvorrichtung:
wenn die Multimediadatei eine Audiodatei ist, Extrahieren eines Stimmabdruckmerkmals des Benutzers aus der Multimediadatei durch die Dienstvorrichtung; Vergleichen des extrahierten Stimmabdruckmerkmals mit dem vertrauenswürdigen Stimmabdruckmerkmal; Hinzufügen eines Stimmigkeitsergebnisses zu der Zieltransaktion, wenn das extrahierte Stimmabdruckmerkmal und das vertrauenswürdige Stimmabdruckmerkmal miteinander stimmig sind; und Hinzufügen eines Unstimmigkeitsergebnisses zu der Zieltransaktion, wenn das extrahierte Stimmabdruckmerkmal und das vertrauenswürdige Stimmabdruckmerkmal nicht miteinander stimmig sind;
wenn die Multimediadatei eine Videodatei oder eine Bilddatei ist, Extrahieren eines Gesichtsmerkmals des Benutzers aus der Multimediadatei durch die Dienstvorrichtung; Vergleichen des extrahierten Gesichtsmerkmals mit dem vertrauenswürdigen Gesichtsmerkmal; Hinzufügen eines Stimmigkeitsergebnisses zu der Zieltransaktion, wenn das extrahierte Gesichtsmerkmal und das vertrauenswürdige Gesichtsmerkmal miteinander stimmig sind; und Hinzufügen eines Unstimmigkeitsergebnisses zu der Zieltransaktion, wenn das extrahierte Gesichtsmerkmal und das vertrauenswürdige Gesichtsmerkmal nicht miteinander stimmig sind; oder,
wenn die Multimediadatei eine Audio- und Videodatei ist, Extrahieren eines Stimmabdruckmerkmals und eines Gesichtsmerkmals des Benutzers aus der Multimediadatei durch die Dienstvorrichtung; Vergleichen des extrahierten Stimmabdruckmerkmals mit dem vertrauenswürdigen Stimmabdruckmerkmal, Vergleichen des extrahierten Gesichtsmerkmals mit dem vertrauenswürdigen Gesichtsmerkmal; Hinzufügen eines Stimmigkeitsergebnisses zu der Zieltransaktion, wenn das extrahierte Stimmabdruckmerkmal und das vertrauenswürdige Stimmabdruckmerkmal miteinander stimmig sind und das extrahierte Gesichtsmerkmal und das vertrauenswürdige Gesichtsmerkmal miteinander stimmig sind; und Hinzufügen eines Unstimmigkeitsergebnisses zu der Zieltransaktion, wenn das extrahierte Stimmabdruckmerkmal und das vertrauenswürdige Stimmabdruckmerkmal nicht miteinander stimmig sind oder das extrahierte Gesichtsmerkmal und das vertrauenswürdige Gesichtsmerkmal nicht miteinander stimmig sind.

2. Verfahren nach Anspruch 1, wobei die Multimediadatei speziell Folgendes umfasst:
Beliebige einer Audiodatei, einer Videodatei, einer Textdatei und einer Bilddatei.

3. Verfahren nach Anspruch 1,
wobei das Aufzeichnen des Verhaltens und/oder der Stimme des Benutzers in der Multimediadatei durch das Benutzergerät speziell Folgendes umfasst:
Aufzeichnen des Verhaltens und/oder der Stimme des Benutzers durch das Benutzergerät in der Multimediadatei nach erfolgreichem Authentifizieren einer Identität des Benutzers auf der Basis von Identitätsauthentifizierungsinformationen entsprechend dem Zielkonto.

4. Verfahren nach Anspruch 1, wobei das Aufzeichnen des Verhaltens und/oder der Stimme des Benutzers in der Multimediadatei durch das Benutzergerät speziell Folgendes umfasst:
Detektieren einer Aufzeichnungsszene durch das Benutzergerät, um einen Aufzeichnungsszenenparameter zu erhalten;
Senden des Aufzeichnungsszenenparameters zu der Dienstvorrichtung durch das Benutzergerät;
Bestimmen eines Nötigungsrepräsentationswerts durch die Dienstvorrichtung auf der Basis des Aufzeichnungsszenenparameters, wobei der Nötigungsrepräsentationswert verwendet wird, um eine Wahrscheinlichkeit zu repräsentieren, dass sich der Benutzer in einem genötigten Zustand befindet, und der Nötigungsrepräsentationswert positiv mit der Wahrscheinlichkeit, dass sich der Benutzer in dem genötigten Zustand befindet, in Beziehung steht;
Bestimmen durch die Dienstvorrichtung, ob der Nötigungsrepräsentationswert kleiner als eine spezifizierte Schwelle ist; und,
wenn der Nötigungsrepräsentationswert kleiner als die spezifizierte Schwelle ist, Benachrichtigen des Benutzergeräts durch die Dienstvorrichtung, das Verhalten und/oder die Stimme des Benutzers in der Multimediadatei aufzuzeichnen.

5. Verfahren nach Anspruch 4, wobei der Aufzeichnungsszenenparameter Szenenortsinformationen und/oder Szenenumgebungsinformationen und/oder ein Stimmenmerkmal des Benutzers und/oder ein Ausdruckmerkmal des Benutzers umfasst.

6. Verfahren nach Anspruch 1, wobei das Konstruieren der Zieltransaktion durch die Dienstvorrichtung auf der Basis der Multimediadatei speziell Folgendes umfasst:
Konstruieren der die Multimediadatei enthaltenden Zieltransaktion durch die Dienstvorrichtung.

7. Verfahren nach Anspruch 1, wobei das Konstruieren der Zieltransaktion durch die Dienstvorrichtung auf der Basis der Multimediadatei speziell Folgendes umfasst:
Speichern der Multimediadatei durch die Dienstvorrichtung und Bestimmen eines der Multimediadatei entsprechenden Ziel-Hash durch Verwendung eines Hash-Algorithmus auf der Basis der Multimediadatei; und
Konstruieren der das Ziel-Hash enthaltenden Zieltransaktion durch die Dienstvorrichtung.

8. Verfahren nach Anspruch 7, wobei das Bestimmen des der Multimediadatei entsprechenden Ziel-Hash durch die Dienstvorrichtung durch Verwendung des Hash-Algorithmus auf der Basis der Multimediadatei speziell Folgendes umfasst:
Berechnen des der Multimediadatei entsprechenden Ziel-Hash durch die Dienstvorrichtung durch Verwendung des Hash-Algorithmus und Verwendung der Multimediadatei und von Speicherortsinformationen davon als Eingabe des Hash-Algorithmus.

9. Verfahren nach Anspruch 1, das ferner vor dem Rundsenden der Zieltransaktion zu dem Blockchain-Netzwerk durch die Dienstvorrichtung Folgendes umfasst:
als Reaktion darauf, dass die Dienstvorrichtung ein Unstimmigkeitsergebnis zu der Zieltransaktion hinzufügt, Abfragen und Erhalten von Identitätsinformationen des Benutzers auf der Basis des extrahierten Stimmabdruckmerkmals und/oder des extrahierten Gesichtsmerkmals des Benutzers; und
Hinzufügen der Identitätsinformationen des Benutzers zu der Zieltransaktion durch die Dienstvorrichtung.

10. Verfahren nach Anspruch 1, das ferner vor dem Rundsenden der Zieltransaktion zu dem Blockchain-Netzwerk durch die Dienstvorrichtung Folgendes umfasst:
Hinzufügen eines Zeitstempels einer aktuellen Zeit zu der Zieltransaktion durch die Dienstvorrichtung.

11. Ein oder mehrere computerlesbare Speichermedien, auf denen Anweisungen gespeichert sind, die, wenn sie durch eine Dienstvorrichtung, die ein Knoten in einem Blockchain-Netzwerk ist, ausgeführt werden, bewirken, dass die Dienstvorrichtung ein Beweiserfassungsverfahren auf Blockchain-Ledger-Basis ausführt, umfassend:
Empfangen einer durch Benutzergerät gesendeten Multimediadatei durch die Dienstvorrichtung, wobei die Multimediadatei durch Aufzeichnen des Verhaltens und/oder der Stimme eines Benutzers durch das Benutzergerät als Reaktion auf eine durch das Benutzergerät empfangene und durch den Benutzer mittels eines auf der Dienstvorrichtung registrierten Zielkontos eingegebenen Beweiserfassungsanweisung erhalten wird; und
Konstruieren (S106) einer Zieltransaktion auf der Basis der Multimediadatei und Rundsenden der Zieltransaktion zu dem Blockchain-Netzwerk, damit jeder Knoten in dem Blockchain-Netzwerk die Zieltransaktion zu einer Blockchain hinzufügt, auf der Basis eines Konsensmechanismus;
wobei das Verfahren ferner Folgendes umfasst:
Erhalten eines Gesichtsmerkmals und eines Stimmabdruckmerkmals eines Eigentümers des Zielkontos im Voraus als vertrauenswürdiges Gesichtsmerkmal und vertrauenswürdiges Stimmabdruckmerkmal, das dem Zielkonto entspricht; und
beliebige der folgenden Operationen vor dem Rundsenden der Zieltransaktion zu dem Blockchain-Netzwerk durch die Dienstvorrichtung:
wenn die Multimediadatei eine Audiodatei ist, Extrahieren eines Stimmabdruckmerkmals des Benutzers aus der Multimediadatei; Vergleichen des extrahierten Stimmabdruckmerkmals mit dem vertrauenswürdigen Stimmabdruckmerkmal; Hinzufügen eines Stimmigkeitsergebnisses zu der Zieltransaktion, wenn das extrahierte Stimmabdruckmerkmal und das vertrauenswürdige Stimmabdruckmerkmal miteinander stimmig sind; und Hinzufügen eines Unstimmigkeitsergebnisses zu der Zieltransaktion, wenn das extrahierte Stimmabdruckmerkmal und das vertrauenswürdige Stimmabdruckmerkmal nicht miteinander stimmig sind;
wenn die Multimediadatei eine Videodatei oder eine Bilddatei ist, Extrahieren eines Gesichtsmerkmals des Benutzers aus der Multimediadatei; Vergleichen des extrahierten Gesichtsmerkmals mit dem vertrauenswürdigen Gesichtsmerkmal; Hinzufügen eines Stimmigkeitsergebnisses zu der Zieltransaktion, wenn das extrahierte Gesichtsmerkmal und das vertrauenswürdige Gesichtsmerkmal miteinander stimmig sind; und Hinzufügen eines Unstimmigkeitsergebnisses zu der Zieltransaktion, wenn das extrahierte Gesichtsmerkmal und das vertrauenswürdige Gesichtsmerkmal nicht miteinander stimmig sind; oder,
wenn die Multimediadatei eine Audio- und Videodatei ist, Extrahieren eines Stimmabdruckmerkmals und eines Gesichtsmerkmals des Benutzers aus der Multimediadatei; Vergleichen des extrahierten Stimmabdruckmerkmals mit dem vertrauenswürdigen Stimmabdruckmerkmal, Vergleichen des extrahierten Gesichtsmerkmals mit dem vertrauenswürdigen Gesichtsmerkmal; Hinzufügen eines Stimmigkeitsergebnisses zu der Zieltransaktion, wenn das extrahierte Stimmabdruckmerkmal und das vertrauenswürdige Stimmabdruckmerkmal miteinander stimmig sind und das extrahierte Gesichtsmerkmal und das vertrauenswürdige Gesichtsmerkmal miteinander stimmig sind; und Hinzufügen eines Unstimmigkeitsergebnisses zu der Zieltransaktion, wenn das extrahierte Stimmabdruckmerkmal und das vertrauenswürdige Stimmabdruckmerkmal nicht miteinander stimmig sind oder das extrahierte Gesichtsmerkmal und das vertrauenswürdige Gesichtsmerkmal nicht miteinander stimmig sind.

12. Beweiserfassungssystem auf Blockchain-Ledger-Basis, das ein Blockchain-Netzwerk, Benutzergerät und einen beliebigen Knoten in dem Blockchain-Netzwerk, der eine Dienstvorrichtung ist, umfasst, wobei das System dafür ausgelegt ist, das Verfahren nach einem der Ansprüche 1 bis 10 auszuführen.

## Revendications

1. Procédé d'acquisition de preuves sur la base d'un registre de blockchain, comprenant :
la réception (S100), par un équipement utilisateur, d'une instruction d'acquisition de preuves entrée par un utilisateur par le biais d'un compte cible, le compte cible étant inscrit sur un dispositif de service préalablement à la réception ;
l'enregistrement (S102), par l'équipement utilisateur, d'un comportement et/ou d'une voix de l'utilisateur dans un fichier multimédia en réponse à l'instruction d'acquisition de preuves ;
l'envoi (S104), par l'équipement utilisateur, du fichier multimédia au dispositif de service, le dispositif de service prenant la forme d'un nœud dans le réseau de blockchain ; et
la construction (S106), par le dispositif de service, d'une transaction cible sur la base du fichier multimédia et la diffusion de la transaction cible vers le réseau de blockchain pour chaque nœud dans le réseau de blockchain afin d'ajouter la transaction cible à une blockchain sur la base d'un mécanisme de consensus ;
le procédé comprenant en outre :
l'obtention préalable, par le dispositif de service, d'une caractéristique faciale et d'une caractéristique d'empreinte vocale d'un détenteur du compte cible en tant que caractéristique faciale de confiance et caractéristique d'empreinte vocale de confiance correspondant au compte cible ; et,
avant la diffusion, par le dispositif de service, de la transaction cible vers le réseau de blockchain, l'une quelconque des opérations suivantes :
en réponse au fait que le fichier multimédia est un fichier audio, l'extraction, par le dispositif de service, d'une caractéristique d'empreinte vocale de l'utilisateur à partir du fichier multimédia ; la comparaison de la caractéristique d'empreinte vocale extraite à la caractéristique d'empreinte vocale de confiance ; l'ajout d'un résultat de cohérence dans la transaction cible en réponse au fait que la caractéristique d'empreinte vocale extraite et la caractéristique d'empreinte vocale de confiance soient cohérentes entre elles ; et l'ajout d'un résultat d'incohérence dans la transaction cible en réponse au fait que la caractéristique d'empreinte vocale extraite et la caractéristique d'empreinte vocale de confiance soient incohérentes entre elles ;
en réponse au fait que le fichier multimédia est un fichier vidéo ou un fichier d'images, l'extraction, par le dispositif de service, d'une caractéristique faciale de l'utilisateur à partir du fichier multimédia ; la comparaison de la caractéristique faciale extraite à la caractéristique faciale de confiance ; l'ajout d'un résultat de cohérence dans la transaction cible en réponse au fait que la caractéristique faciale extraite et la caractéristique faciale de confiance soient cohérentes entre elles ; et l'ajout d'un résultat d'incohérence dans la transaction cible en réponse au fait que la caractéristique faciale extraite et la caractéristique faciale de confiance soient incohérentes entre elles ; ou
en réponse au fait que le fichier multimédia est un fichier audio et vidéo, l'extraction, par le dispositif de service, d'une caractéristique d'empreinte vocale et d'une caractéristique faciale de l'utilisateur à partir du fichier multimédia ; la comparaison de la caractéristique d'empreinte vocale extraite à la caractéristique d'empreinte vocale de confiance ; la comparaison de la caractéristique faciale extraite à la caractéristique faciale de confiance ; l'ajout d'un résultat de cohérence dans la transaction cible en réponse au fait que la caractéristique d'empreinte vocale extraite et la caractéristique d'empreinte vocale de confiance soient cohérentes entre elles et la caractéristique faciale extraite et la caractéristique faciale de confiance soient cohérentes entre elles ; et l'ajout d'un résultat d'incohérence dans la transaction cible en réponse au fait que la caractéristique d'empreinte vocale extraite et la caractéristique d'empreinte vocale de confiance soient incohérentes entre elles ou la caractéristique faciale extraite et la caractéristique faciale de confiance soient incohérentes entre elles.

2. Procédé selon la revendication 1, dans lequel le fichier multimédia comporte plus particulièrement :
un fichier quelconque parmi un fichier audio, un fichier vidéo, un fichier de texte et un fichier d'images.

3. Procédé selon la revendication 1,
dans lequel l'enregistrement, par l'équipement utilisateur, du comportement et/ou de la voix de l'utilisateur dans le fichier multimédia comporte plus particulièrement :
après authentification réussie d'une identité de l'utilisateur sur la base d'informations d'authentification d'identité correspondant au compte cible, l'enregistrement, par l'équipement utilisateur, du comportement et/ou de la voix de l'utilisateur dans le fichier multimédia.

4. Procédé selon la revendication 1, dans lequel l'enregistrement, par l'équipement utilisateur, du comportement et/ou de la voix de l'utilisateur dans le fichier multimédia comporte plus particulièrement :
la détection, par l'équipement utilisateur, d'une scène d'enregistrement afin d'obtenir un paramètre de scène d'enregistrement ;
l'envoi, par l'équipement utilisateur, du paramètre de scène d'enregistrement au dispositif de service ;
la détermination, par le dispositif de service, d'une valeur de représentation de contrainte sur la base du paramètre de scène d'enregistrement, la valeur de représentation de contrainte étant utilisée pour représenter une probabilité que l'utilisateur soit sous la contrainte, et la valeur de représentation de contrainte étant corrélée positivement avec la probabilité que l'utilisateur soit sous la contrainte ;
la détermination, par le dispositif de service, si la valeur de représentation de contrainte est inférieure ou non à un seuil prescrit ; et
en réponse au fait que la valeur de représentation de contrainte est inférieure au seuil prescrit, la notification, par le dispositif de service, à l'équipement utilisateur d'enregistrer le comportement et/ou la voix de l'utilisateur dans le fichier multimédia.

5. Procédé selon la revendication 4, dans lequel le paramètre de scène d'enregistrement comporte des informations d'emplacement de scène et/ou des informations d'environnement de scène et/ou une caractéristique vocale de l'utilisateur et/ou une caractéristique d'expression de l'utilisateur.

6. Procédé selon la revendication 1, dans lequel la construction, par le dispositif de service, de la transaction cible sur la base du fichier multimédia comporte plus particulièrement :
la construction, par le dispositif de service, de la transaction cible contenant le fichier multimédia.

7. Procédé selon la revendication 1, dans lequel la construction, par le dispositif de service, de la transaction cible sur la base du fichier multimédia comporte plus particulièrement :
le stockage, par le dispositif de service, du fichier multimédia et la détermination d'un hachage cible correspondant au fichier multimédia au moyen d'un algorithme de hachage sur la base du fichier multimédia ; et
la construction, par le dispositif de service, de la transaction cible contenant le hachage cible.

8. Procédé selon la revendication 7, dans lequel la détermination, par le dispositif de service, du hachage cible correspondant au fichier multimédia au moyen de l'algorithme de hachage sur la base du fichier multimédia comporte plus particulièrement :
le calcul, par le dispositif de service, du hachage cible correspondant au fichier multimédia au moyen de l'algorithme de hachage et en utilisant, en entrée de l'algorithme de hachage, le fichier multimédia et ses informations d'emplacement de stockage.

9. Procédé selon la revendication 1, comprenant en outre, avant la diffusion, par le dispositif de service, de la transaction cible vers le réseau de blockchain :
en réponse à l'ajout, par le dispositif de service, d'un résultat d'incohérence dans la transaction cible, la requête et l'obtention d'informations d'identité de l'utilisateur sur la base de la caractéristique d'empreinte vocale extraite et/ou de la caractéristique faciale extraite de l'utilisateur ; et
l'ajout, par le dispositif de service, des informations d'identité de l'utilisateur dans la transaction cible.

10. Procédé selon la revendication 1, comprenant en outre, avant la diffusion, par le dispositif de service, de la transaction cible vers le réseau de blockchain :
l'ajout, par le dispositif de service, d'une estampille temporelle d'une heure actuelle dans la transaction cible.

11. Support(s) de stockage lisible(s) par ordinateur sur le(s)quel(s) sont stockées des instructions qui, lorsqu'elles sont exécutées par un dispositif de service prenant la forme d'un nœud dans un réseau de blockchain, amènent le dispositif de service à mettre en œuvre un procédé d'acquisition de preuves basé sur un registre de blockchain comprenant :
la réception, par le dispositif de service, d'un fichier multimédia envoyé par un équipement utilisateur, le fichier multimédia étant obtenu par enregistrement d'un comportement et/ou d'une voix d'un utilisateur par l'équipement utilisateur en réponse à une instruction d'acquisition de preuves reçue par l'équipement utilisateur et entrée par l'utilisateur par le biais d'un compte cible inscrit sur le dispositif de service ; et
la construction (S106) d'une transaction cible sur la base du fichier multimédia et la diffusion de la transaction cible vers le réseau de blockchain pour chaque nœud dans le réseau de blockchain afin d'ajouter la transaction cible à une blockchain sur la base d'un mécanisme de consensus ;
le procédé comprenant en outre :
l'obtention préalable, par le dispositif de service, d'une caractéristique faciale et d'une caractéristique d'empreinte vocale d'un détenteur du compte cible en tant que caractéristique faciale de confiance et caractéristique d'empreinte vocale de confiance correspondant au compte cible ; et,
avant la diffusion de la transaction cible vers le réseau de blockchain, l'une quelconque des opérations suivantes :
en réponse au fait que le fichier multimédia est un fichier audio, l'extraction d'une caractéristique d'empreinte vocale de l'utilisateur à partir du fichier multimédia ; la comparaison de la caractéristique d'empreinte vocale extraite à la caractéristique d'empreinte vocale de confiance ; l'ajout d'un résultat de cohérence dans la transaction cible en réponse au fait que la caractéristique d'empreinte vocale extraite et la caractéristique d'empreinte vocale de confiance soient cohérentes entre elles ; et l'ajout d'un résultat d'incohérence dans la transaction cible en réponse au fait que la caractéristique d'empreinte vocale extraite et la caractéristique d'empreinte vocale de confiance soient incohérentes entre elles ;
en réponse au fait que le fichier multimédia est un fichier vidéo ou un fichier d'images, l'extraction d'une caractéristique faciale de l'utilisateur à partir du fichier multimédia ; la comparaison de la caractéristique faciale extraite à la caractéristique faciale de confiance ; l'ajout d'un résultat de cohérence dans la transaction cible en réponse au fait que la caractéristique faciale extraite et la caractéristique faciale de confiance soient cohérentes entre elles ; et l'ajout d'un résultat d'incohérence dans la transaction cible en réponse au fait que la caractéristique faciale extraite et la caractéristique faciale de confiance soient incohérentes entre elles ; ou
en réponse au fait que le fichier multimédia est un fichier audio et vidéo, l'extraction d'une caractéristique d'empreinte vocale et d'une caractéristique faciale de l'utilisateur à partir du fichier multimédia ; la comparaison de la caractéristique d'empreinte vocale extraite à la caractéristique d'empreinte vocale de confiance ; la comparaison de la caractéristique faciale extraite à la caractéristique faciale de confiance ; l'ajout d'un résultat de cohérence dans la transaction cible en réponse au fait que la caractéristique d'empreinte vocale extraite et la caractéristique d'empreinte vocale de confiance soient cohérentes entre elles et la caractéristique faciale extraite et la caractéristique faciale de confiance soient cohérentes entre elles ; et l'ajout d'un résultat d'incohérence dans la transaction cible en réponse au fait que la caractéristique d'empreinte vocale extraite et la caractéristique d'empreinte vocale de confiance soient incohérentes entre elles ou la caractéristique faciale extraite et la caractéristique faciale de confiance soient incohérentes entre elles.

12. Système d'acquisition de preuves sur la base d'un registre de blockchain, comprenant un réseau de blockchain, un équipement utilisateur et un nœud quelconque dans le réseau de blockchain prenant la forme d'un dispositif de service, le système étant configuré pour mettre en œuvre le procédé selon l'une quelconque des revendications 1 à 10.
